(19) Europäisches Patentamt
European Patent Office
Office européen des brevets

(11) **EP 2 054 461 B1**

(12) **EUROPEAN PATENT SPECIFICATION**

(45) Date of publication and mention
of the grant of the patent:
**23.08.2017 Bulletin 2017/34**

(51) Int Cl.:
**C08G 73/02** *(2006.01)*  **B27N 3/00** *(2006.01)*
**D21H 17/55** *(2006.01)*

(21) Application number: **07811512.8**

(22) Date of filing: **23.08.2007**

(86) International application number:
**PCT/US2007/018666**

(87) International publication number:
**WO 2008/024444 (28.02.2008 Gazette 2008/09)**

(54) **ADHESIVE COMPOSITION OF LOW MOLECULAR WEIGHT POLYAMINOPOLYAMIDE-EPICHLOROHYDRIN (PAE) RESIN AND PROTEIN**

HAFTMITTELZUSAMMENSETZUNG AUS POLYAMINOPOLYAMID-EPICHLORHYDRIN (PAE)-HARZ UND EINEM PROTEIN

COMPOSITION ADHÉSIVE FAITE D'UNE RÉSINE DE LYAMINOPOLYAMIDE-ÉPICHLOROHYDRINE (PAE) DE FAIBLE POIDS MOLÉCULAIRE ET D'UNE PROTÉINE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **24.08.2006 US 839745 P**

(43) Date of publication of application:
**06.05.2009 Bulletin 2009/19**

(73) Proprietor: **Solenis Technologies Cayman, L.P.
8200 Schaffhausen (CH)**

(72) Inventors:
• **SPRAUL, Bryan, K.**
**Wilmington, DE 19810 (US)**
• **BRADY, Richard, L.**
**Wilmington, DE 19808-5619 (US)**
• **ALLEN, Anthony, J.**
**Wilmington, DE 19808-1923 (US)**

(74) Representative: **Bülle, Jan et al
Kutzenberger Wolff & Partner
Theodor-Heuss-Ring 23
50668 Köln (DE)**

(56) References cited:
US-A- 3 494 775         US-A1- 2001 034 406
US-A1- 2004 089 418     US-A1- 2005 261 404

EP 2 054 461 B1

**Description**

**FIELD OF THE INVENTION**

The invention is directed to adhesive compositions made of low molecular weight polyamidoamine-epihalohydrin resins (PAE resins) and certain proteins (such as soy flour or soy protein isolate) and to their use in preparing wood composites such as laminated veneer or plywood composites.

**BACKGROUND OF THE INVENTION**

PAE polymers are well-known as wet strength additives in papermaking processes. Technology for using these PAE polymers as curing agent components for protein or lignin-based adhesives is known (see US application 2005/0282988). The use of the PAE' s with proteins, such as soy flour, soy protein isolate or lignin as adhesives for lignocellulosic is known (Kaichang Li, U.S. Patent 7,252,735, August 8, 2007).

US 2001/034406 relates to a water-soluble thermosetting resin giving high wet-strength of paper which comprises 20 % by weight or less of components having a molecular weight of 10,000 or less.

US 2005/0261404 discloses thermosetting adhesive compositions for use in e.g. particleboard or fiberboard, wherein the composition comprises a blend of a protein-based component and a polymeric quarternary amine cure accelerant.

US 2004/089418 relates to a method for making lignocellulosic composites by adhering lignocellulosic substrates together.

RONALD W. MAURER, Georgia Institute of Technology, August 2006, relates to the effect of sequential adsorption of poly(1-vinylpyrrolidone-co-styrene) and Kymene 557H onto wood fibers.

A current limitation of this type of adhesive is the high viscosity of the adhesive formulation at a desirable solids content and short adhesive pot life. The high viscosity hinders the application of the adhesive to the substrate. Addition of water is typically required to bring the adhesive to a workable viscosity. The extra water reduces the solids content, thus reducing the amount of active material added to the substrate. In addition, this water often must be removed for the final product at the cost of time, productivity, and energy. There remains a need in the industry to produce a PAE-containing adhesive with longer storage stability and increased ease of handling.

**BRIEF SUMMARY OF THE INVENTION**

The invention is directed to compositions containing low molecular polyamidoatnine-epihalohydrins (PAE) polymers of low molecular weight namely of between 2,000-50,000 g/mol and a soy protein in which the weight ratio of protein to PAE is from 100:0.1 to 0.1:100.

The invention is also directed to the use of the compositions as adhesives for binding wood materials, such as laminates, plywood, particle board, oriented strand board and fiberboard.

Inasmuch as the viscosity of a liquid composition is indicative of the molecular weight of polymers in the composition, the low molecular weight of the PAE used in the compositions can also be expressed by a low Reduced Specific Viscosity (RSV) of less than 0.3 dl/g. These low mol. weight or low viscosity PAE's are to be differentiated from high molecular weight PAE's of the art which have mol. wt. of 100,000 g/mol or more.

The lower adhesive viscosity provides better handling properties, as well as allowing for less water in the adhesive formulation. The lower viscosity provides for both ease of handling of the adhesive material and the pot life if the adhesive formulation.

Application of the adhesive for making engineered wood products and other types of useful materials can be achieved by roller coating, knife coating, extrusion, curtain coating, foam coaters and spray coaters one example of which is the spinning disk resin applicator. Although requirements vary for different grades and types of applications, lower viscosity is a benefit when using these application techniques, especially for spraying of adhesive formulations.

**DETAILED DESCRIPTION OF THE INVENTION**

As stated above, the invention is directed towards use of a low molecular weight thermosetting polyamidoamine-epichlorohydrin resin (PAE resin) in an adhesive composition comprising the PAE resins and protein These adhesives are useful for bonding wood and other materials. The low molecular weight PAE resins have a lower viscosity which allows them to be prepared and handled at high solids contents without encountering problems with gelation stability. The lower viscosity PAE resins are also useful in providing a lower viscosity PAE/protein adhesive composition, compared to an adhesive formulation prepared with a high molecular weight PAE resin. Surprisingly, it has been discovered that the dry and wet adhesive properties of adhesive compositions made with a low molecular weight PAE resin are equivalent to the dry and wet adhesive properties provided by a high molecular weight PAE resin.

The lower viscosity adhesive compositions provide several benefits that the use of higher molecular weight PAE resins do not. This reduced viscosity provides longer storage stability and an increased ability to distribute the adhesive. Lower viscosity also improves the pumping of the adhesive and allows the adhesive to be sprayed more easily at a higher solids content than a corresponding adhesive composition made with a high molecular weight PAE resin.

## PAE SYNTHESIS

The synthesis of PAE resins is a two step process. A polyamidoamine is first prepared by the polycondensation of a polyamine with a polycarboxylic acid or a polycarboxylic acid derivative. A polycarboxylic acid is an organic compound with at least two carboxylic acid (carboxylate) functional groups. The resulting polyamidoamine is then dissolved in water and is reacted in aqueous solution with epichlorohydrin to prepare the final PAE product. The viscosity of the PAE resin of the present invention is less than 75 cps at 20% solids measured at 25°C by Brookfield viscometer.

The molecular weight of the PAE resin used in the present invention is less than 100,000 g/mol.. The molecular weight is greater than 2,000 g/mol, preferably greater than 5,000. Preferably the molecular weight is from about 5,000 to 80,000 g/mol, more preferably from about 10,000 to about 80,000 g/mol. The Reduced Specific Viscosity (RSV) of the PAE resin of the present invention is less than 0.3 dL/g more preferable less than 0.25 dL/g measured at 2% concentration in 1M ammonium chloride at 25°C. RSV is a measurement of a polymer's solution viscosity that correlates directly to its molecular weight. Generally, the RSV can range from 0.0500 to 0.300 dL/g. In terms of Brookfield viscosity, the viscosity of a 20% solids aqueous solution of the PAE resin can range from 85 cps to less than 15 cps, such as 10 cps or 5 cps.

The polyamidoamine is typically prepared by heating a polycarboxylic acid with a polyamine at a temperature of 125-200°C for 1 to 10 hours while collecting the water of condensation produced in the reaction, at atmospheric pressure. Where a reduced pressure is employed, lower temperatures such as 75°C to 150°C may be utilized. At the end of this reaction, the resulting product is dissolved in water, at a concentration of about 20 to 80% by weight total polymer solids, more typically at a concentration of about 30 to 70% and most typically at a concentration of about 40 to 60%.

A diester can be used instead of a diacid to produce the polyamidoamine. When the diester is used, the polymerization can be conducted at a lower temperature, preferably about 100-175°C at atmospheric pressure. In this case the byproduct will be an alcohol, the type of alcohol depending upon the identity of the diester. For instance, where a dimethyl ester is employed the alcohol byproduct will be methanol, while ethanol will be the byproduct obtained from a diethyl ester. Where a reduced pressure is employed, lower temperatures such as 75°C to 150°C may be utilized.

Typically, dicarboxylic acids and/or derivatives are used for the preparation of polyamidoamines s, although polycarboxylic having more than two carboxylate groups may be used. Suitable polycarboxylic acids include but are not limited to malonic acid, glutaric acid, adipic acid, azelaic acid, citric acid, tricarballylic acid (1,2,3-propanetricarboxylic acid), 1,2,3,4-butanetetracarboxylic acid, nitrilotriacetic acid, N,N,N',N'-ethylenediaminetetraacetate, 1,2-cyclohexanedicarboxylic acid, 1,3-cyclohexanedicarboxylic acid, 1,4-cyclohexanedicarboxylic acid, phthalic acid, isophthalic acid, terephthalic acid, 1,2,4-benzenetricarboxylic acid (trimellitic acid) and 1,2,4,5-benzenetetracarboxylic acid (pyromellitic acid) and mixtures thereof.

Polycarboxylic acid derivatives may also be used to prepare the polyamidoamine. These derivatives can be carboxylate esters, acid halides or acid anhydrides. These derivatives are typically more reactive towards amines than the corresponding carboxylic acid, so the reaction conditions to make polyamidoamines using carboxylic acid derivatives are generally milder than the conditions used to prepare polyamidoamines from polycarboxylic acids and polyamines.

When esters of the polycarboxylic acids are employed to produce the polyamidoamine to make the PAE used in the invention the methyl or ethyl esters are typically used. In this case the alcohol byproduct (methyl alcohol or ethyl alcohol) is distilled off in the synthesis and the synthesis can be performed at a lower temperature than when the corresponding carboxylic acid is used. A strongly basic catalyst such as sodium methoxide can be employed in the synthesis of the polyamidoamides from polycarboxylic esters and polyamines. Particular esters of polycarboxylic acids which are suitable include dimethyl adipate, dimethyl malonate, diethyl malonate, dimethyl succinate, dimethyl glutarate and diethyl glutarate.

Suitable acid anhydrides that may be used to prepare the polyamidoamine include, but are not limited to, succinic anhydride, maleic anhydride, N,N,N',N'-ethylenediaminetetraacetate dianhydride, phthalic anhydride, mellitic anhydride and pyromellitic anhydride and mixtures thereof.

i.A polycarboxylic acid halide is reacted with the polyamine to form a polyamidoamine. Particularly suitable are the polycarboxylic acid chlorides. In this case the reaction can be performed at very low temperatures. Appropriate polycarboxylic acid halides can be prepared from polycarboxylic acids by their reaction with thionyl chloride or phosphorus trichloride. Examples include, but are not limited to, adipoyl chloride, glutaryl chloride, and sebacoyl chloride.

A single polycarboxylic acid or derivative thereof may be used in the polyamidoamine synthesis as well as mixtures of polycarboxylic acids. In addition, mixtures of polycarboxylic acids and derivatives of polycarboxylic acids are also suitable for use in this reaction.

A variety of polyamines may be used in preparing the polyamidoamine. These include the general class of polyalkylenepolyamines which can be polyethylene polyamines, polypropylene polyamines, polybutylene polyamines, polypentylene polyamines, polyhexylene polyamines, and mixtures thereof. More specifically, the polyalkylenepolyamines contemplated for use may be represented as polyamines in which the nitrogen atoms are linked together by groups of the formula $-C_nH_{2n}-$ where n is a small integer greater than unity and the number of such groups in the molecule ranges from two up to about eight. The nitrogen atoms may be attached to adjacent carbon atoms in the group $-C_nH_{2n}-$ or to carbon atoms further apart, but not to the same carbon atom.

This contemplates not only the use of such polyamines as diethylenetriamine, triethylenetetramine, tetraethylenepentamine and dipropylenetriamine, which can be obtained in reasonably pure form, but also mixtures and various crude polyamine materials. For example, the mixture of polyethylene polyamines obtained by the reaction of ammonia and ethylene dichloride, refined only to the extent of removal of chlorides, water, excess ammonia, and ethylenediamine, is a satisfactory starting material. The term "polyalkylenepolyamine" employed in the claims, therefore, refers to and includes any of the polyalkylenepolyamines referred to above or to a mixture of such polyalkylenepolyamines and derivatives thereof.

Additional polyamines that are suitable for use include, but are not limited to, bishexamethylenetriamine (BHMT), N-methylbis(aminopropyl)amine (MBAPA), aminoethylpiperazine (AEP) and other polyalkylenepolyamines (e.g., spermine, spermidine). Preferably, the polyamines are diethylenetriamine (DETA), triethylenetetramine (TETA), tetraethylenepentamine (TEPA) and dipropylenetriamine (DPTA).

When diamines are used in the synthesis of a polyamidoamine, they do not contribute to amine functionality in the final product, since both ends have reacted to form amide linkages. This has the effect of "diluting out" the amine functionality in the polymer, i.e. the amine equivalent molecular weight is increased. It is desirable, in some cases, to increase the spacing of secondary amino groups on the polyamide molecule in order to change the reactivity of the polyamide-epichlorohydrin complex. This can be accomplished by substituting a diamine such as ethylenediamine, propylenediamine, hexamethylenediamine and the like for a portion of the polyalkylene polyamine. For this purpose, up to about 80% of the polyalkylene polyamine may be replaced by molecularly equivalent amount of the diamine. Usually, a replacement of about 50% or less will serve the purpose.

Similar to adding a diamine in a polyamidoamnine synthesis, aminocarboxylic acids or lactams increase the spacing between amine functional groups without contributing any amine functionality to the polymer. Appropriate aminocarboxylic acids containing at least three carbon atoms or lactams thereof are also suitable for use to increase spacing in the present invention. For example, 6-aminohexanoic acid and caprolactam are suitable additives for this purpose.

Several methods of preparing polyamidoamines have been disclosed that provide control over the polyamidoamine molecular weight and structure. These include the use of monofunctional endcapping agents to control molecular weight, disclosed in U.S. Patent 5,786,429, U.S. Patent 5,902,862 and U.S. Patent 6,222,006. Such use of endcapping agents in the polyamidoamine synthesis is a useful feature that can be incorporated into the polyamidoamines used as starting materials in this invention. For example, when preparing an endcapped polyamidoamine one may replace a portion of the diacid with a monofunctional acid and/or may replace a portion of the polyamine with a monofunctional amine.

Various procedures, conditions and materials can be utilized to produce endcapping when preparing the polyamidoamine including conventional procedures, conditions and materials, and include those described herein. Starting with, for example, an equimolar mixture of dicarboxylic acid and polyalkylenepolyamine, for every 1 mole of diacid or polyalkylenepolyamine removed a quantity of preferably about 2 moles of monofunctional carboxylic acid or monofunctional amine endcapper is used.

One can control the molecular weight of a condensation polymer by adjusting the relative amounts of bifunctional and monofunctional reactants (endcappers) in the system. The theory of molecular weight control and the effect of monofunctional additives for condensation polymer is well known. The $DP_n$ is defined as the number-average degree of polymerization or the average number of monomer units in a polymer chain. Equation 1 defines the $DP_n$ in terms of the molar ratios of the components, assuming complete reaction of all functional groups.

$$DP_n = (1+r)/(1-r) \qquad [1.]$$

where r is defined as the ratio of the monomer units and is calculated as follows:

$$r = A/(B + 2C) \qquad [2.]$$

A and B are the difunctional monomer components and C is the monofunctional component (end-capper). The quantity r will always be less than 1.

A controlled molecular weight product is prepared by using specific amounts of a monofunctional reactant. The composition may be defined in terms of a polyamidoamine prepared from A parts dicarboxylic acid, B parts polyalkylenepolyamine and C parts monofunctional endcapping moiety, all parts given as molar quantities.

When A>B the endcapping moiety will be a monofunctional amine and C will equal about 2(A-B). When B>A the endcapper will be a monofunctional acid and C will be equal to about 2(B-A). For this case Equation [2.] is rewritten as:

$$r = B/(A + 2C) \qquad [3.]$$

Preferably, the polyamidoamines have a range of $DP_n$ of from about 3 to 50, more preferably a range of from about 3 to 40, and most preferably a range of $DP_n$ is from about 3 to 30.

Various temperatures and reaction times can be utilized in the reaction to produce the polyamidoamine. Temperatures of between about 125°C and 260°C are preferred, more preferably between about 155°C and 200°C, and the reaction mixtures are maintained at these temperatures for preferably between about 2 to 12 hours, more preferably between about 2 to 6 hours.

Suitable monofunctional amines used as endcappers include, but are not limited to, monofunctional primary amines, including monoalkyl amines and monoalkanolamines, and monofunctional secondary amines, including dialkylamines and dialkanolamines.

Monofunctional primary amines include, but are not limited to butylamine, ethanolamine (i.e., monoethanolamine, or MEA), cyclohexylamine, 2-methylcyclohexylamine, 3-methylcyclohexylamine, 4-methylcyclohexylamine, benzylamine, isopropanolamine (i.e., monoisopropanolamine), mono-sec-butanolamine, 2-amino-2-methyl-1-propanol, tris(hydroxymethyl)aminomethane, tetrahydrofurfurylamine, furfurylamine, 3-amino-1,2-propanediol, 1-amino-1-deoxy-D-sorbitol, and 2-amino-2-ethyl-1,3-propanediol. Monofunctional secondary amines include, but are not limited to, diethylamine, dibutylamine, diethanolamine (i.e., DEA), di-*n*-propylamine, diisopropanolamine, di-*sec*-butanolamine, and N-methylbenzylamine.

Monofunctional carboxylic acids suitable for the endcapped polyamidoamine include, but are not limited to, benzoic acid, 2-hydroxybenzoic acid (i.e., salicylic acid), 3-hydroxybenzoic acid, acetic acid, phenylacetic acid, propionic acid, butyric acid, valeric acid, caproic acid, caprylic acid, 2-ethylhexanoic acid, oleic acid, ortho-toluic acid, meta-toluic acid, and para-toluic acid, ortho-methoxybenzoic acid, meta-methoxybenzoic acid, and para-methoxybenzoic acid.

Monofunctional carboxylic acid esters suitable for the endcapped polyamidoamine include, but are not limited to, methyl acetate, ethyl acetate, methyl benzoate, ethyl benzoate, methyl propionate, ethyl propionate, methyl butyrate, ethyl butyrate, methyl phenyl acetate, and ethyl phenyl acetate.

The volatility of the endcapping agent should be low enough so that the endcapping agent remains in the polymerization reaction at the temperature at which the reaction is being conducted. Particularly, when the polyamidoamine is prepared by thermally driven polycondensation, volatility is a significant feature of the endcapping agent; in this instance, an endcapping agent of lesser volatility is preferred. The boiling point of the endcapping agent should be high enough so that, at the temperature being employed to drive off the condensation product - i.e., water where a diacid reactant is used, and alcohol in the case of diester - the agent is not also removed.

Another technique for controlling the molecular weight of a polyamidoamine is taught in U.S. Patent 6,908,983 and U.S. Patent 6,554,961. An amine excess is used to provide amine terminated materials. The amine termination has the effect of increasing the amine content of the polyamidoamine and also limits the molecular weight. As the amine excess is increased, the amine content of the polyamidoamine increases and the molecular weight decreases. This technique is generally referred to herein as "amine excess reaction", "amine excess polyamidoamine" or "amine excess polymer". It is contemplated that an amine excess prepared polyamidoamine can be used to prepare the PAE resins of the present invention.

For example, this route to obtaining the amine excess polyamidoamines uses an excess of polyalkylenepolyamine in the synthesis. This involves employing a reaction mixture wherein the ratio of total number of amine groups from the polyamine to the total number of carboxylic acid groups form the polycarboxylic acid is greater than 1 which results in a polyamidoamine with a preponderance of amine endgroups. The stoichiometry of polyamine to polycarboxylic acid, e.g., diethylenetriamine to adipic acid, can range from greater than about 1.0:1.0, on a molar basis, to 1.7:1.0, more preferably, greater than about 1.01:1.0 to 1.4:1.0.

Changing the stoichiometry of the reagents in favor of excess polyamine results in polyamidoamines having lower molecular weights than one would obtain by reacting an equimolar mixture under the same conditions. The polyamidoamines have a range of $DP_n$ of from about 3 to 50, more preferably a range of from about 3 to 40, and most preferably a range of $DP_n$ is from about 3 to 30.

Polyamidoamines disclosed in U.S. Patent 6,294,645 include endcapped materials and polyamidoamines in which the molecular weight is controlled by the extent of reaction. This patent teaches how to control the molecular weight of a polyamidoamine by controlling the amount of distillate (water) removed during the polycondensation reaction of a dibasic acid and a polyamine. In accordance with well known principles of polymer chemistry, the molecular weight increases with increasing extent of reaction and amount of distillate produced. Lower molecular weights can be achieved by stopping the reaction before the theoretical amount of distillate has been produced.

The second step in the synthesis of a PAE resin or polymer is the reaction of the polyamidoamine with epichlorohydrin to form a thermosetting cationic resin. The preparation of thermosetting PAE resins is well known.

The synthesis of the PAE resin is typically conducted in aqueous solution. To convert the polyamidoamine to a cationic thermosetting resin, the polyamidoamine is reacted with epihalohydrin, preferably epichlorohydrin, at a temperature from about 25°C, to about 100°C and preferably between about 35°C to about 70°C. This reaction is preferably carried out in aqueous solution to moderate the reaction. Although not necessary, pH adjustment can be performed to increase or decrease the rate of crosslinking.

When the desired reaction endpoint is reached, sufficient water can be added to adjust the solids content of the resin solution to the desired amount and the product can be cooled to ambient temperature and then stabilized to permit storage by improving the gelation stability by adding sufficient acid to reduce the pH to less than about 6, preferably less than about 5, and most preferably less than about 4. Any suitable inorganic or organic acid may be used to stabilize the product. Examples include, but are not limited to, hydrochloric acid, sulfuric acid, methanesulfonic acid, nitric acid, formic acid, phosphoric and acetic acid.

In the polyamidoamine-epichlorohydrin reaction, it is preferred to use sufficient epichlorohydrin to convert most of the secondary amine groups to tertiary amine groups. For polyamidoamines that contain tertiary amine groups, it is preferred to use sufficient epichlorohydrin to convert most of the tertiary amine groups to quaternary amine groups. However, more or less may be added to moderate or increase reaction rates. In general, results may be obtained utilizing from about 0.5 mole to about 1.8 moles of epichlorohydrin for each amine group of the polyamidoamine. It is preferred to utilize from about 0.6 mole to about 1.5 moles for each amine group of the polyamidoamine.

Epichlorohydrin is the preferred epihalohydrin for use in the present invention. The present application refers to epichlorohydrin specifically in certain instances, however, the person skilled in the art will recognize that these teachings apply to epihalohydrin in general.

Prior art has taught that viscosity build in the polyamidoamine-epichlorohydrin reaction should proceed to a certain point to determine when an acceptable molecular weight has been achieved in the final PAE resin. Higher molecular weight was taught to give greater strength characteristics. This teaching is in contrast to the present invention. In the present invention, the development of high molecular weight is not a desirable feature and measures are taken to prevent significant molecular weight increase from occurring. The main focus of the polyamidoamine-epichlorohydrin reaction as performed in the current invention is to functionalize the polyamidoamine with epichlorohydrin and generate the desired reactive functionality (aminochlorohydrin and/or azetidinium) without incurring an appreciable increase in molecular weight.

A single cook step can be used for the polyamidoamine-epichlorohydrin reaction or a two step process can be used for the preparation of the low molecular weight PAE resin. In the single step process, epichlorohydrin is added to an aqueous solution of polyamidoamine and is allowed to react at a temperature of 35-70°C. An acid may be added to lower the pH of the reaction mixture and control the molecular weight increase of the PAE resin. Any suitable inorganic or organic acid may be used to stabilize the product. Examples include, but are not limited to hydrochloric acid, sulfuric acid, methanesulfonic acid, nitric acid, formic acid, phosphoric and acetic acid. The reaction is stopped by cooling, addition of dilution water and stabilization with an added acid before the resin develops any significant increase in molecular weight.

A two-step process can be employed in order to better control the reaction and to reduce the levels of epichlorohydrin byproducts in the final product. The first step of this process is performed at low temperature (10-45°C) and is referred to as the alkylation step. In this low temperature step epichlorohydrin reacts with amine groups in the polyamidoamine to form aminochlorohydrin functional groups. Epichlorohydrin is added to an aqueous solution of the polyamidoamine (typically 30-40% total solids before adding epichlorohydrin) and maintaining the reaction temperature at 10-45°C for 1 to 12 hours. During this time water may be added to slow the rate of crosslinking. After the alkylation step the reaction is then diluted to an even lower solids content (20-30%) and the reaction is heated to 50-80°C to convert the aminochlorohydrin functional groups to azetidinium functional groups. Depending on the molecular weight of the polyamidoamine and the desired cook time, a mineral acid ($H_2SO_4$) may be added to adjust the pH (4.0 - 6.0) to reduce the rate of polymer crosslinking. This is typically done at 50-55°C, however it could be done earlier.

The amount of mineral acid added may differ from the conventional synthesis of a PAE-epichlorohydrin resin, where crosslinking for increased molecular weight is desired. If additional acid is used in the present invention it will result in lower reaction pH values, which inhibits the increase of molecular weight. The reaction is then terminated after a short period (about 15-90 minutes) at the required temperature or after achieving a set viscosity target. The reaction time at the elevated temperature is short compared to traditional preparations of PAE resins which have a cook time of 120-150 minutes at the elevated temperature.

While increased mineral acid use is a robust method of making lower molecular weight PAE' s, by utilizing proper viscosity monitoring it is possible to synthesis a PAE with similar properties using standard levels of mineral acid. Crosslinking is a step growth process so molecular weight roughly doubles with each crosslink. By killing the reaction before the molecular weight gained by crosslinking becomes significant a PAE with relatively low molecular weight can made using existing processes.

The proper combination of the reaction solids, mineral acid addition and the reaction time results in PAE resins with appreciable azetidinium functionality (50-60 mol%), aminochlorohydrin functionality (~15%) and having molecular weights and viscosities that can be on the order of the starting polyamidoamine and range up to half that of a standard PAE resin.

## PREPARATION OF ADHESIVES

Adhesive compositions of the present invention are prepared by combining the low molecular weight PAE resin with a protein and preferably lignin. Suitable sources of protein include soy protein, blood meal, feather meal, keratin, gelatin, collagen, gluten and casein. The protein may be pretreated or modified to improve its solubility, dispersability and/or reactivity. U.S. patent 7,060,798, teaches methods of modifying protein and their incorporation in to an adhesive.

One particularly useful source of protein for the current invention is soy. Soy protein can commonly be obtained in the form of soy flour (about 50 wt. % protein, dry basis), soy protein concentrate (about 65 wt. % protein, dry basis) and soy protein isolate (SPI, at least about 85 wt. % protein, dry basis).

Lignin may be an industrial lignin such as Kraft lignin, obtained from the Kraft process of making cellulose pulp from wood.

The combination of low molecular weight PAE resin and protein and/or preferably lignin is prepared as an aqueous mixture wherein the components are combined and mixed with additional dilution water if required. Other additives may be included in the adhesive formulation such as extenders, viscosity modifiers, defoamers, biocides, and fillers such as wheat flour, tree bark flour, nut shell flour and corn cob flour. The components of the adhesive formulation are combined in a suitable mixer and are stirred until a homogeneous mixture is obtained. The adhesive compositions are typically prepared with solids contents in the range of 5 to 75 wt. %, more preferably in the range of 10 to 60 wt. % and most preferably in the range of 20 to 50 wt. %. The most effective ratio of PAE resin to protein and/or lignin in the adhesive composition will depend on the substrate being bonded, the type of protein and/or lignin used and the physicochemical properties of the PAE resin. The ratio of protein and/or lignin to PAE resin used in adhesive formulations will be preferably in the range of 100:1 to 0.1:1, more preferably in the range of 25:1 to 0.5:1 and most preferably in the range of 10:1 to 1:1.

The pH of the adhesive mixture can be adjusted to control the reactivity of the thermosetting system. PAE resins are more reactive in the neutral to alkaline region (pH 6-9) and adjusting the pH to this range will give increasing reactivity as the pH ranges from about 6 to about 9. At some point above pH 9 thermosetting reactivity is reduced due to competing reactions such as hydrolysis of the polymer backbone.

The adhesive compositions are thermosetting materials and as such are cured by the application of heat and optionally, pressure. Typical temperatures for curing the adhesive compositions are in the range of 50 to 250°C, more preferably in the range of 80 to 200°C and most preferably in the range of 100 to 150°C. Curing times at these temperatures can range from 30 seconds to one hour, more preferably from one minute to 30 minutes and most preferably from 2 minutes to 10 minutes.

## USE OF ADHESIVES

The adhesive composition can be added to a suitable substrate in the range of 1 to 25% by weight, preferably in the range of 1 to 10% by weight and most preferably in the range of 2 to 8% by weight. Examples of some suitable substrates include, but are not limited to, a lignocellulosic material, pulp or glass fiber. As stated previously the adhesive composition can be applied by the use of roller coating, knife coating, extrusion, curtain coating, foam coaters and spray coaters one example of which is the spinning disk resin applicator.

The use of adhesives to prepare lignocellulosic composites is taught in "Wood-based Composite Products and Panel Products", Chapter 10 of Wood Handbook - Wood as an engineering material, Gen. Tech. Rep. FPL-GTR-113, 463 pages, U.S. Department of Agriculture, Forest Service, Forest Products Laboratory, Madison, WI (1999\). A number of materials can be prepared using the adhesive composition of the invention including particleboard, oriented strand board (OSB), waferboard, fiberboard (including medium-density and high-density fiberboard), parallel strand lumber (PSL), laminated strand lumber (LSL) and other similar products. Lignocellulosic materials such as wood, wood pulp, straw (including rice, wheat or barley), flax, hemp and bagasse can be used in making thermoset products from the invention. The lignocellulosic product is typically made by blending the adhesive with a substrate in the form of powders, particles, fibers, chips, flakes fibers, wafers, trim, shavings, sawdust, straw, stalks or shives and then pressing and heating the resulting combination to obtain the cured material. The moisture content of the lignocellulosic material should be in the range of 2 to 20% before blending with the adhesive composition.

The adhesive compositions also may be used to produce plywood or laminated veneer lumber (LVL). The adhesive composition may be applied onto veneer surfaces by roll coating, knife coating, curtain coating, or spraying. A plurality of veneers are then laid-up to form sheets of required thickness. The mats or sheets are then placed in a heated press (e.g., a platen) and compressed to effect consolidation and curing of the materials into a board. Fiberboard may be made by the wet felted/wet pressed method, the dry felted/dry pressed method, or the wet felted/dry pressed method.

In addition to lignocellulosic substrates, the adhesive compositions can be used with substrates such as glass wool, glass fiber and other inorganic materials. The adhesive compositions can also be used with combinations of lignocellulosic and inorganic substrates.

EXAMPLES

**Example 1. Synthesis of a PAE resin using sulfuric acid to prevent molecular weight gain.**

A 500 mL 4 neck round bottom flask was charged with 106.8g of a polyamidoamine made from diethylenetriamine (DETA) and adipic acid, and 45.8g dilution water water. The polyamidoamine was prepared from an equimolar mixture of adipic acid and diethylenetriamine and had a total solids content of 48.69% in water. The reduced specific viscosity (RSV) of a 2% solution of the polymer in 1 N ammonium chloride was 0.143 dL/g as determined at 25.0°C by means of a Cannon automated capillary viscometer. A Poly VISC or AutoVISC model viscometer can be used for this purpose, both of which are available from Cannon Instrument Company, State College, PA. Flow times of the 2% polymer solution and the pure solvent are measured and the relative viscosity (Nrel) calculated. The reduced viscosity is calculated from the relative viscosity, and the reduced specific viscosity is calculated by dividing the reduced viscosity by the solution concentration. At 22°C, 22.58g epichlorohydrin was added all at once and the reaction was heated to 40 °C. The reaction was held at that temperature for 190 minutes from the time of epichlorohydrin addition. Additional water (197.72 g) was added to dilute the reaction to 22% total solids and the reaction was then heated to 65°C. Once the reaction reached 49°C sulfuric acid (3.0 g) was added. The reaction was held at 65 °C until the reaction temperature had been >60 °C for 60 minutes. At that time sulfuric acid (3.16 g) was used to adjust the pH to 2.8 and water was used to dilute the reaction. Total solids = 21.69%. Viscosity, functionality and SEC molecular weight are shown in Table 1. Brookfield viscosity was measured at 20% solids and 25°C at 60 rpm with a #62 spindle using a Brookfield LV DV-E viscometer. The functionality was determined by NMR. The following procedure was used for all NMR measurement in the examples.

Sample preparation:

(1) Prepare ~1.5% solution of phosphoric acid into a 17cc vial (~10 cc of $D_2O$)
(2) Add #1 solution (~10-20 drops) to 100g of $D_2O$ until a pH of 3.0 - 3.5 is achieved.
(3) Weigh ~50mg of the as-received Kymene into a 5cc vial.
(4) Add ~1cc of phosphoric acid buffered $D_2O$ (#2 solution) into the same vial.
(5) Mix contents of the vial using a vortex mixer.
(6) Transfer the contents of the vial into a 5mm NMR tube using a glass pipette.

The $^1$H NMR spectra are acquired using BRUKER Avance spectrometers equipped with an inverse 5mm probe. A $^1$H NMR operating frequency of 400 MHz (Avance 400) or 500 MHz (Avance 500) is sufficient for data collection. Electronic integration of the appropriate signals provides molar concentrations of the following alkylation components; polymeric aminochlorohydrins (ACH), and azetidinium ions (AZE). In order to calculate the concentrations of each of these species, the integral values must be placed on a one (1) proton basis. For example, the spectral region between 1.72-1.25 ppm represents four (4) protons from the adipate portion of the diethylenetriamine-adipate backbone, hence the integral value is divided by 4. This value is used as the polymer common denominator (PCD) for calculation of the alkylation species. The chemical shifts of these species are provided below (using an adipate field reference of 1.5 ppm). The corresponding integral value of each alkylation product is used in the numerator for calculation, refer to examples below:

- AZE signal at 4.85-4.52 ppm represents 3 protons, thus, a division factor of 3 is required;

$$\text{integral of AZE} \div 3 \div \text{PCD} = \text{mole fraction AZE}$$

- ACH signal at 68-69 ppm represents 2 AZE protons and 1 ACH proton;

$$\text{integral of ACH} - (\text{AZE signal} \div 3 \times 2) \div \text{PCD} = \text{mole fraction ACH}$$

The following spectral parameters are standard experimental conditions for $^1$H NMR analysis PAE-Epichlorohydrin resins on the Bruker Avance 400.

| | |
|---|---|
| Temperature | 55°C |
| Resonance Frequency | 400 MHz |
| # Data Points Acquired | 32K |
| Acquisition Time | 2 seconds |
| Sweep Width | 8278 Hz |
| Number of Scans | 32 |
| Relaxation Delay | 8 seconds |
| Pulse Tip Angle | 90° |
| Pulse Program* | zgpr (presaturation) |
| Processed Spectral Size | 32K |
| Apodization Function | exponential |
| Line Broadening | 0.3 Hz |

Water suppression pulse power level is 80 - 85dB - 60 Watt $^1$H transmitter. Excess power will attenuate adjacent signals - USE "SOFT" PULSE

Molecular weight was measured using Size Exclusion Chromatography (SEC), which is also referred to as Gel Permeation Chromatography (GPC). The SEC chromatograms were determined using a Waters Millenium 32 system, available from Waters Corporation, Milford MA. The SEC method employed a mobile phase of 0.2 M lithium nitrate in water with 0.1 vol. % trifluoroacetic acid at a flow rate of 1.0 mL/min. The columns used for the SEC determinations were obtained from Eprogen Incorporated, Darien IL. The column set used was a CatSEC 4000, CatSEC 1000, CatSEC 300, CatSEC 100 and a CatSEC 10 um. The columns employed were all 300 mm x 8mm. The column temperature was 40°C and the differential refractive index (DRI) detector temperature was also 40°C. The calibration curve was constructed using a series of poly(vinyl pyridine) narrow molecular weight standards ranging in molecular weight from 1,090 to 1,650,000 Daltons obtained from Polymer Standards Service USA, Incorporated, Warwick, RI and a 202 molecular weight standard of 1-propylpyridinium bromide available from Aldrich Chemical Company, Milwaukee, WI. Samples for analysis were dissolved in the mobile phase at a concentration of 5 mg/mL and were filtered through a 45$\mu$m pore size poly(vinylidene fluoride) filter before being analyzed.

**Example 2. Synthesis of a PAE resin starting with a lower molecular weight resin using a lower amount of sulfuric acid to prevent molecular weight gain.**

A quantity of 213.6g of a polyamidoamine prepared as disclosed in U.S. Patent 5,644,021, Example 4, having an RSV of 0.13 dL/g, measured as described in Example 1, and a total solids content of 50.0% in water was added to a 1 liter 4 neck round bottom flask. This polymer solution was diluted with 91.6 g of water and was warmed to 25 °C. At that temperature epichlorohydrin (45.15 g) was added all at once and the reaction was heated to 40 °C. The reaction was held at that temperature for 190 minutes from the time of epichlorohydrin addition. Additional water (409.4 g) was added to dilute the reaction to 20% total solids and the reaction was then heated to 65 °C. Once the reaction reached 50 °C sulfuric acid (1.9g) was added. The reaction was held at 65 °C until the reaction temperature had be >60 °C for 90 minutes. At that time sulfuric acid was used to adjust the pH to 2.8. Viscosity, functionality and SEC molecular weight are shown in Table 1.

**Example 3. Synthesis of a PAE resin starting with a very low molecular weight resin using no sulfuric acid to prevent molecular weight gain.**

In a 500 milliliter 4 neck round bottom flask 106.8 g of a diethylenetriamine-adipic acid polymer prepared as described in U.S. Patent 6,294,645, Example 1, Part A, having a solids content of 50.3% in water and an RSV of 0.09 dL/g, measured as described in Example 1, was added along with 46.36 g dilution water . The resulting combination was mixed thoroughly and was warmed to 23.5°C. At that temperature epichlorohydrin (29.12g) was added all at once and the reaction was heated to 40°C. The reaction was held at that temperature for 190 minutes from the time of epichlorohydrin addition. Additional water (169.68g) was added to dilute the reaction to 22% total solids and the reaction was then heated to 65°C. After 110 minutes after water addition, sulfuric acid (6.18g) was used to adjust the pH to 2.83. Total Solids as made = 24.39%. Viscosity, functionality and SEC molecular weight are shown in Table 1.

**Example 4. High Molecular Weight Commercial PAE Resin (Comparative Example)**

Comparative example 4 is Kymene® 624, a commercial PAE resin that is available from Hercules Incorporated, Wilmington DE.

Table 1. Properties of PAE Resins

| Example Number | Resin Viscosity (cps). at 20% TS | Azetidinium (mole%). from 1H NMR | Aminochlorohydrin (mol%) from 1H | Molecular weigh ($M_w$ in D) from SI |
|---|---|---|---|---|
| 1 | 15 | 54 | 15 | 17,400 |
| 2 | <15 | 65 | <1 | 10,100 |
| 3 | <15 | 50 | 6 | 7,900 |
| 4 (comparative) | 115 | 60 | 2-4 | 162,000 |

**Examples 5. Synthesis of a PAE resin with intermediate viscosity.**

A quantity of 213.6g of the polyamidoamine described in Example 1 was added to a 1 L 4-necked round bottom flask with 91.54 g dilution water and was warmed to 25°C. At that temperature epichlorohydrin (45.15 g) was added all at once and the reaction was heated to 40 °C. The reaction was held at that temperature for 190 minutes from the time of the epichlorohydrin addition. Additional water (340.4 g) was then added to dilute the reaction to 22% total solids and the reaction was heated to cook temperature (65 °C) in 30 minutes. After 10 minutes into the heating concentrated $H_2SO_4$ (1.8 g) was added to a pH of 6.75. At 90 from the beginning of the cook a sample was taken and cooled in an ice bath to slow the reaction. After cooling to room temperature the sample was diluted to 20% total solids and brought to a pH of 2.8 with concentrated $H_2SO_4$. The final viscosity was 63 cps at 20% solids.

**Examples 6. PAE resin with intermediate viscosity using sulfuric acid and traditional cook length.**

A quantity of 213.6g of the polyamidoamine described in Example 1 was added to a 1 L 4-necked round bottom flask with 91.54 g dilution water and was warmed to 25 °C. At that temperature epichlorohydrin (45.15 g) was added all at once and the reaction was heated to 40 °C in 20 minutes. The reaction was held at that temperature for 190 minutes from the time of the epichlorohydrin addition. Additional water (404.4 g) was then added to dilute the reaction to 20% total solids and the reaction was heated to cook temperature (65 °C) in 30 minutes. At 50 °C concentrated sulfuric acid (3.0 g) was added. The reaction was heated at 65 °C for 120 minutes at which time it was quenched by addition of concentrated $H_2SO_4$ to a pH of 2.8. The final viscosity was 51 cps at 20% solids.

**Example 7. Preparation of polyamidoamine (PAA) from dimethyl glutarate (DMG) and diethylenetriamine (DETA) excess**

The reaction was performed in a 1 liter resin kettle fitted with a condenser, mechanical stirrer, thermocouple and heating mantle with a temperature controller and an addition funnel. To the reaction vessel was charged 340.46g diethylenetriamine (DETA) followed by 480.51g dimethyl glutarate (DMG) through a pressure-equalizing addition funnel. The stirred reaction mixture was heated to 125°C and was held under reflux conditions at 100-125°C for one hour. The reaction mixture briefly exothermed to 132.8°C. After the one hour reflux the apparatus was changed from reflux to distillation receiver and the reaction mixture was heated to 125°C while collecting methanol distillate. After 69 minutes 190 mL distillate had been collected and the distillate production had slowed considerably. The set temperature was then increased to 175°C. On reaching 175°C the reaction was maintained at this temperature for three hours. At the end of the three hour cook at 175°C a total of 230 mL distillate had been collected. The theoretical amount of distillate for this reaction was 243 mL. Heating was discontinued at this point and 620 mL of warm water (57°C) were carefully added to the reaction vessel. The resulting product was cooled to room temperature and was transferred to a bottle. The product had a total solids content of 50.18% and had a reduced specific viscosity (RSV) of 0.1370 dL/g, measured as described in Example 1. The material had a pH of 11.71 and had a Brookfield viscosity of 343 cPs measured at 60 rpm and 25°C with a #62 spindle using a Brookfield LV DV-E viscometer.

**(Examples 8-12) Polyamidoamines (PAA) made from DMG and DETA excess.**

Several other polyamidoamines were prepared from the reaction of DMG with an excess of DETA. These materials were prepared in a similar manner as Example 7. The reaction conditions and product properties of Examples 8-12 are listed in Table 2.

Table 2. Polyamidoamines Made from DMG and Excess DETA

| Example Number | DETA Charge (g (moles)) | AA Charge (g(moles)) | Cook Time/ Temp | Theo. Amine Eq. Wt. | pH | Total Solids | B'field Visc. (cPs) | RSV dL/g |
|---|---|---|---|---|---|---|---|---|
| 7 | 340.46 (3.30) | 480.51 (3.00) | 3.00/175 | 174.65 | 11.71 | 50.18 | 343 | 0.1370 |
| 8 | 374.51 (3.63) | 528.56 (3.30) | 3.00/165 | 174.65 | 11.20 | 49.74 | 325 | 0.1305 |
| 9 | 370.70 (3.59) | 528.56 (3.30) | 3.00/175 | 177.38 | 11.60 | 50.21 | 360 | 0.1403 |
| 10 | 374.51 (3.63) | 528.56 (3.30) | 3.00/175 | 174.65 | 11.24 | 49.37 | 337 | 0.1345 |
| 11 | 371.41 (3.60) | 480.51 (3.00) | 3.00/175 | 157.07 | 11.56 | 50.02 | 178 | 0.0991 |
| 12 | 371.41 (3.60) | 480.51 (3.00) | 3.00/175 | 157.07 | 12.25 | 48.63 | 167 | 0.1021 |

**(Example 13) Preparation of polyamidoamine (PAA) from adipic acid (AA) and diethylenetriamine (DETA) excess**

The reaction was performed in a 1 liter resin kettle fitted with a distillation receiver, mechanical stirrer, thermocouple and heating mantle with a temperature controller. To the reaction vessel was charged 371.41g diethylenetriamine (DETA) followed by 438.42g adipic acid (AA) through a powder funnel. During the AA addition the temperature reached a maximum 120.6°C. The reaction temperature was set for 125°C and was held there for 20 minutes. A slight reflux was observed at this point. The temperature set point was then increased to 150°C and was held at 150°C for 20 minutes. The set point was then increased to 170°C. Distillate began coming over at 159°C. By the time the reaction reached 170°C 50 mL of distillate had been collected. The temperature was maintained at 170°C for three hours. A total of 90 mL distillate was collected at the end of the three hour cook. The theoretical amount of distillate for this reaction was 108 mL. Heating was discontinued at this point and 700 mL of warm water (53°C) were carefully added to the reaction vessel. The resulting product was cooled to room temperature and was transferred to a bottle. The product had a total solids content of 48.45% and had a reduced specific viscosity (RSV) of 0.0925 dL/g, measured as described in Example 1. The material had a pH of 11.72 and had a Brookfield viscosity of 129 cPs measured at 60 rpm and 25°C with a #62 spindle using a Brookfield LV DV-E viscometer.

**(Examples 14-18) Polyamidoamines (PAA) made from adipic acid (AA) and DETA excess.**

Several polyamidoamines were prepared from the reaction of adipic acid with an excess of DETA. These materials were prepared in a similar manner as Example 12. The reaction conditions and product properties of Examples 14-18 are listed in Table 3.

Table 3. Polyamidoamines made from Adipic Acid and Excess DETA

| Example Number | DETA Charge (g (moles)) | AA Charge (g (moles)) | Cook Time/ Temp | Theo. Amine Eq. Wt. | pH | Total Solids | B'field Visc. (cPs) | RSV dL/g |
|---|---|---|---|---|---|---|---|---|
| 13 | 371.41 (3.60) | 438.42 (3.00) | 3.00/170 | 166.67 | 11.72 | 48.45 | 129 | 0.0925 |
| 14 | 340.46 (3.30) | 438.42 (3.00) | 3.00/170 | 186.11 | 14.08 | 52.40 | 185 | 0.0892 |
| 15 | 355.94 (3.45) | 438.42 (3.00) | 3.00/170 | 174.36 | 11.22 | 47.16 | 155 | 0.1009 |
| 16 | 340.46 (3.30) | 438.42 (3.00) | 3.00/170 | 186.11 | 11.05 | 50.91 | 223 | 0.1033 |
| 17 | 375.54 (3.64) | 409.19 (2.80) | 3.00/170 | 151.79 | 11.16 | 48.46 | 96 | 0.0802 |
| 18 | 355.94 (3.45) | 438.42 (3.00) | 3.00/170 | 175.96 | 11.50 | 48.63 | 158 | 0.0937 |

**(Examples 19-20) Polyamidoamines (PAA) made from adipic acid (AA) and dipropylenetriamine (DPTA) excess.**

Two polyamidoamines were prepared from the reaction of AA with an excess of dipropylenetriamine DPTA. These materials were prepared in a similar manner as Example 12. The reaction conditions and product properties of Examples 19-20 are listed in Table 4.

Table 4. Polyamidoamines Made From Adipic Acid and Excess DPTA

| Example Number | DPTA Charge (g (moles)) | AA Charge (g(moles)) | Cook Time/ Temp | Theo: Amine Eq. Wt. | pH | Total Solids | B'field Visc. (cPs) | RSV dL/g |
|---|---|---|---|---|---|---|---|---|
| 19 | 409.41 (3.12) | 379.96 (2.60) | 3.00/170 | 191.12 | 11.63 | 47.41 | 113 | 0.0845 |
| 20 | 375.29 (2.86) | 379.96 (2.60) | 3.00/170 | 212.04 | 11.28 | 48.14 | 144 | 0.0878 |

**(Examples 21-25) Polyamidoamines (PAA) made from DMG with the PAE resin of N-methyl-bis-(aminopropyl)amine (MBAPA) excess.**

Reaction conditions and properties of Examples 21-25 are shown in Table 5. Examples 21-25 are DMG-MBAPA excess polyamidoamines that were made in a similar manner as Example 7.

Table 5. Polyamidoamines Made From DMG with MBAPA Excess

| Example Number | MBAPA Charge (g(moles)) | DMG Charge (g (moles)) | Cook Time/ Temp | Theo. Amine Eq.Wt. | pH | Total Solids | B'field. Visc. (cPs) | RSV dL/g |
|---|---|---|---|---|---|---|---|---|
| 21 | 435.75 (3.00) | 400.43 (2.50) | 3.00/175 | 193.14 | 10.90 | 51.55 | 515 | 0.1306 |
| 22 | 453.18 (3.12) | 384.41 (2.40) | 3.00/175 | 178.07 | 11.22 | 49.48 | 211 | 0.0941 |
| 23 | 479.33 (3.30) | 480.51 (3.00) | 3.00/175 | 213.22 | 10.91 | 50.51 | 542 | 0.1402 |
| 24 | 467.71 (3.22) | 368.39 (2.30) | 3.00/175 | 166.36 | 11.84 | 48.38 | 150 | 0.0837 |
| 25 | 453.91 (3.125) | 400.43 (2.50) | 3.00/175 | | 12.73 | 49.34 | 117 | 0.0721 |

**(Example 26) Polyamidoamine (PAA) made from adipic acid (AA) with MBAPA excess.**

The reaction was performed in a 1 liter resin kettle fitted with a distillation receiver, mechanical stirrer, thermocouple and heating mantle with a temperature controller. To the reaction vessel was charged 447.34g N-methyl-bis-(aminopropyl)amine (MBAPA) and 145 g water followed by 409.19g adipic acid (AA) through a powder funnel. During the AA addition the temperature reached a maximum 109.8°C. The reaction temperature was set for 125°C and was held there for 20 minutes. A slight reflux was observed at this point. The temperature set point was then increased to 150°C and was held at 150°C for 20 minutes. Distillate began coming over at 132.8°C. By the time the 150°C point was reached 85 mL of distillate had been collected. At the end of the 20 minute hold time at 150°C 95 mL distillate had been collected. The set point was then increased to 170°C. By the time the reaction reached 170°C 165 mL of distillate had been collected. The temperature was maintained at 170°C for three hours. A total of 240 mL distillate was collected at the end of the three hour cook. The theoretical amount of distillate for this reaction was 246 mL. Heating was discontinued at this point and 750 mL of warm water (75°C) were carefully added to the reaction vessel. The resulting product was cooled to room temperature and was transferred to a bottle. The product had a total solids content of 50.28% and had a reduced specific viscosity (RSV) of 0.1159 dL/g, measured as described in Example 1. measured at a concentration of 2.0 wt. % in 1.0 M ammonium chloride using a Canon viscometry unit The reduced viscosity of a 2% solution of the polymer in 1 N ammonium chloride was determined at 25.0 °C by means of a Cannon automated capillary viscometer. A PolyVISC or AutoVISC model viscometer can be used for this purpose, both of which are available from Cannon Instrument Company, State College, PA. Flow times of the 2% polymer solution and the pure solvent are measured and the relative viscosity (Nrel) calculated. The reduced viscosity is calculated from the relative viscosity, and the reduced specific viscosity is calculated by dividing the reduced viscosity by the solution concentration. The material had a pH of 10.26 and had a Brookfield viscosity of 342 cPs. The Brookfield viscosity was measured on the product at the solids reported (50.28%) measured at 60 rpm and 25°C with a #62 spindle using a Brookfield LV DV-E viscometer.

Examples 27-38 Illustrate the preparation of PAE resins from polyamidoamines prepared with an amine excess.

### (Example 27) PAE resin prepared from a 1.1/1.0 DETA/DMG Polyamidoamine

The reaction was performed in a 4-necked 1,000 mL jacketed flask fitted with a condenser, thermocouple, pH meter, mechanical stirrer and heated with a circulating water bath. The reaction vessel was charged with 174.02g of polyamidoamine (Example 7) and 91g of dilution water. To this stirred solution was added 48.58 g of epichlorohydrin. The theoretical total solids content of the reaction was 43.4% at this point. The reaction mixture was heated to 40°C for three hours using the circulating water bath. An initial exotherm to 42.7°C was observed. After the three hour hold time at 40°C 278g dilution water and 8.02g of concentrated sulfuric acid (96%) were added to the reaction mixture. The theoretical solids content at this point was 20%. The reaction temperature was increased to 65°C. When the reaction temperature reached 65°C the stirred mixture was held at this temperature for one hour. At the end of the one hour cook at 65°C the reactor contents were cooled to room temperature and the pH was adjusted to 2.81 with 4.89g concentrated sulfuric acid (96%). The product had a total solids content of 24.93% and had a reduced specific viscosity (RSV) of 0.2028 dL/g, measured as described in Example 1. The Brookfield viscosity was 37 cPs measured at 60 rpm and 25°C with a #62 spindle using a Brookfield LV DV-E viscometer.

### (Examples 28-38) PAE resins prepared from the amine excess polyamidoamines.

PAE resins were prepared from the amine excess polyamidoamines. These materials were prepared in a manner similar to the procedure used to synthesize Example 27. The reaction conditions and product properties for these resins are shown in Table 6. All of these examples were heated in the first step to 40°C for three hours. In the second cook step Examples 28-33 were held at 65°C for one hour. For Examples 34-38 the reaction mixture was heated to 65°C in the second cook step and the Gardner-Holt (G-H) viscosity was monitored until a G-H value of "A" to "A+" was reached. The Brookfield viscosity measurements listed in Table 6 are for the PAE resins at the as-made solids content listed in the table. The Brookfield viscosities were measured at 60 rpm and 25°C with a #62 spindle using a Brookfield LV DV-E viscometer.

Table 6. PAE Resins Prepared from Amine Excess Polyamidoamines (PAmAm)

| Example Number | PAmAm Example Number | PAmAm Charge | Epi Charge | 1st Sulfuric g | Final Sulfuric g | Final G-H Visc. | 1st Cook Min. | 2nd Cook Min. | Cook Temp. °C | pH | Total Solids | B'field Visc. (cPs) | RSV dL/g | Mw SEC | Mw/Mn SEC |
|---|---|---|---|---|---|---|---|---|---|---|---|---|---|---|---|
| 4 | - | - | - | - | - | - | - | - | - | 3.27 | 19.8 | 115 | 0.4705 | 162,000 | 32.53 |
| 27 | 7 | 174.02 | 48.58 | 8.02 | 4.89 | - | 180 | 60 | 40/65 | 2.81 | 24.93 | 37 | 0.2028 | 48,700 | 14.89 |
| 28 | 13 | 172.00 | 50.89 | 7.74 | 6.99 | - | 180 | 60 | 40/65 | 2.81 | 25.70 | <15 | 0.0778 | 4,41.0 | 2.83 |
| 29 | 8 | 175.56 | 50.89 | 7.68 | 4.95 | - | 180 | 60 | 40/65 | 2.75 | 21.74 | <15 | 0.1435 | 15,400 | 5.32 |
| 30 | 13 | 182.78 | 50.89 | 7.61 | 8.85 | - | 180 | 60 | 40/65 | 2.81 | 21.78 | <15 | 0.0787 | 4,590 | 2.87 |
| 31 | 15 | 186.55 | 50.89 | 7.80 | 8.13 | - | 180 | 60 | 40/65 | 2.81 | 27.36 | <15 | 0.0877 | 5,460 | 3.04 |
| 32 | 25 | 160.26 | 43.48 | 6.30 | 2.68 | - | 181 | 60 | 40/65 | 2.44 | 20.16 | <15 | 0.1442 | 2,420 | 10.11 |
| 33 | 19 | 163.29 | 43.48 | 6.50 | 2.61 | - | 180 | 60 | 40/65 | 2.81 | 19.73 | <15 | 0.0666 | 2.630 | 2.47 |
| 34 | 11 | 157.01 | 50.89 | 7.60 | 2.48 | A | 180 | 165 | 40/65 | 2.76 | 21.71 | <15 | 0.1027 | 7,310 | 3.54 |
| 35 | 10 | 176.88 | 50.89 | 7.60 | 5.33 | A+ | 180 | 20 | 40/65 | 2.50 | 21.57 | 15 | 0.1560 | 19,753 | 6.54 |
| 36 | 11 | 157.01 | 52.05 | 7.60 | 2.56 | A- | 180 | 130 | 40/65 | 2.64 | 21.62 | <15 | 0.0963 | 6,784 | 3.41 |
| 38 | 10 | 176.88 | 53.20 | 7.60 | 0.60 | A | 180 | 115 | 40/65 | 2.79 | 21.29 | <15 | 0.1444 | 16,500 | 5.81 |

**(Example 38b) Synthesis of a PAE resin using 25% cook solids without increased mineral aicd use.**

In a 1L 4 neck round bottom flask 240 g of a diethylenetriamine-adipic acid polymer prepared as described in Example 1, Part A, having a solids content of 49.53% in water and an RSV of 0.1471 dL/g, measured as described in Example 1, was added along with 68.77 g dilution water. The resulting combination was mixed thoroughly and was warmed to 25°C. At that temperature epichlorohydrin (50.02 g) was added all at once and the reaction was heated to 40°C and held there. After 140 min from epichlorohydrin addition water (123.73 g) was added. After 195 minutes from the time of epichlorohydrin addition additional water (167.03 g) was added to dilute the reaction to 26% total solids and the reaction was then heated to 65°C. Once the reaction reached 50 °C sulfuric acid (5 g) was added. The reaction was held at 65 °C until it achieved a Gardner-Holt viscosity of "F-G". At that time water (25.98 g), and sulfuric acid (7.79 g), were added to bring the pH to 2.82 and solids to 25.28%. Viscosity was 60.1 cps at 25% TS and 35.7 cps at 20% TS. Molecular weight ($M_w$) by SEC was 76,600, Azetidinium (mol%) from $^1$HNMR was 54.1%.

**Preparation of Lignocellulosic Adhesives with Soy Flour:**

**Examples 39-44. Soy Flour/PAE Curing Agent Adhesive Formulations**

The resins from Examples 1, 2, 3, 5 and 6 and a comparative current art resin (Kymene® 624 from Hercules Incorporated, Wilmington, DE) were formulated into adhesives as follows:

Example 39 was made with the PAE resin of Example 4. (Kymene® 624 PAE resin available from Hercules Incorporated, Wilmington DE, comparative example.)
Example 40 was made with the PAE resin of Example 1.
Example 41 was made with the PAE resin of Example 2.
Example 42 was made with the PAE resin of Example 3.
Example 43 was made with the PAE resin of Example 5.
Example 44 was made with the PAE resin of Example 6.

The PAE resin (20% in water, 11.25 g) was diluted with water (23 g) in a 100 mL beaker. Soy Flour (Cargill Prolia® 100/90, available from Cargill Incorporated, Minneapolis MN, 15.57g) was stirred in using a mechanical stirrer at 200 rpm at room temperature for 10 minutes. This gave an adhesive composition with a soy flour to PAE resin ratio of 7:1 with a total solids content of 36%.
The viscosity was measured using a Brookfield LVT viscometer using spindle #4 at 1.5 rpm and at ambient temperature. Viscosity results are shown in Table 7. Adhesive formulations prepared with the lower viscosity PAE resins gave much lower viscosities than the formulation made with the high molecular weight PAE resin (comparative example). This reduced viscosity is a useful feature in the use and application of these materials as adhesives.
The adhesion to wood was measured in a lap shear configuration by overlapping and gluing two wooden craft sticks (6.67mm x 7.5mm x 1.65mm) together and pressing them at 200 psi and 250°F for 5 minutes in a Carver lab press having 6" x 6" platens. The overlapped area was 15 x 6.67 mm. The breaking load was measured in tensile mode with a Shimpo force gauge and stand. The lap shear adhesion is the breaking load divided by the overlapped area. Samples were measured either dry or after a 1 hr boil (wet). Six samples were tested for each condition and the results were averaged to give the lap shear adhesion values shown in Table 7.
Surprisingly, it is seen that the dry and wet adhesion for formulations made from the low viscosity resins are essentially the same as the properties obtained using the high molecular weight PAE resin. Figure 1 shows the dry and wet adhesion as a function resin viscosity. The strength of the adhesive is unexpectedly insensitive to the viscosity/molecular weight of the resin. This observation does not support the general concept that higher molecular weight polymers give higher strength materials.

Table 7. Properties of Adhesive Compositions Made with PAE Resins and Soy Flour

| Example Number | PAE Resin Example | Resin viscosity (cps) at 20% TS | Adhesive Formulation Viscosity (cps) @ 36% TS | Dry Adhesion (psi) | Wet adhesion (psi) |
|---|---|---|---|---|---|
| 39 comparative example | 4 | 115 | 320,000 | 583 | 272 |
| 40 | 1 | 15 | 70,000 | 626 | 250 |
| 41 | 2 | <15 | 60,000 | 474 | 278 |

(continued)

| Example Number | PAE Resin Example | Resin viscosity (cps) at 20% TS | Adhesive Formulation Viscosity (cps) @ 36% TS | Dry Adhesion (psi) | Wet adhesion (psi) |
|---|---|---|---|---|---|
| 42 | 3 | <15 | 43,000 | 534 | 269 |
| 43 | 5 | 63 | - | 599 | 297 |
| 44 | 6 | 51 | - | 551 | 279 |

## Examples 45-48. Soy Flour/PAE Curing Agent Adhesive Formulations

The resins from Examples 29, 30 and 31 and a comparative current art resin (Kymene® 624 from Hercules Incorporated, Wilmington, DE) were used to prepare adhesive formulations with soy flour. A quantity of PAE resin having 4.50g resin solids was placed in ajar with sufficient dilution water to bring the total mass of the mixture to 68.5g. While mixing with a propeller type stirrer, 31.50g Prolia® 100/90 soy flour available from Cargill Incorporated, Minneapolis MN, was slowly added. After the soy flour had been added the mixture was stirred for 60 minutes. This gave an adhesive composition with a soy flour to PAE resin ratio of 7:1 with a total solids content of 36%.

At the end of the 60 minute mix the Brookfield viscosity was measured at 25°C using a Brookfield DVE viscometer using a number 7 spindle at 1.5 and 5.0 rpm. The viscosity values for these formulations are listed in Table 8.

The formulations were tested for dry and wet lap shear strength as described above. Results are shown in Table 8.

The adhesive formulations made with the low molecular weight PAE resins (Examples 46-48) had significantly lower viscosity than the formulation made with the high molecular weight PAE resin (Example 45). The dry lap shear strength of Examples 46-48 were similar to the dry lap shear for Example 45. The wet shear strength of the formulations made with the low viscosity PAE resins tended to be lower than the wet shear strength of the formulation made with the high molecular weight PAE resin.

Table 8. Adhesive Formulations Made From PAE Resins and Soy Flour

| Example Number | PAE Resin Example Number | B'fld. Visc. @ 1.5 rpm cPs | B'fld. Visc. @ 5.0 rpm cPs | Dry Shear psi | Wet Shear psi |
|---|---|---|---|---|---|
| 45 Comparative Example | 4 | 400,000 | 178,400 | 589 | 216 |
| 46 | 29 | 157,000 | 66,400 | 472 | 152 |
| 47 | 30 | 115,000 | 54,400 | 446 | 105 |
| 48 | 31 | 128,000 | 52,000 | 540 | 158 |

## Examples 49-53. Soy Flour/PAE Curing Agent Adhesive Formulations

The resins from Examples 34, 35, 36 and 37 and a comparative current art resin (Kymene® 624 from Hercules Incorporated, Wilmington, DE) were used to prepare adhesive formulations with soy flour. A quantity of PAE resin having 4.50g resin solids was placed in ajar with sufficient dilution water to bring the total mass of the mixture to 68.5g. While mixing with a propeller type stirrer, 31.50g Prolia®100/90 soy flour available from Cargill Incorporated, Minneapolis MN, was slowly added. After the soy flour had been added the mixture was stirred for 60 minutes. This gave an adhesive composition with a soy flour to PAE resin ratio of 7:1 with a total solids content of 36%.

At the end of the 60 minute mix the Brookfield viscosity was measured at 25°C using a Brookfield DVE viscometer using a number 7 spindle at 1.5 and 5.0 rpm. The viscosity values for these formulations are listed in Table 9.

The formulations were tested for dry and wet lap shear strength as described above. Results are shown in Table 9.

The adhesive formulations made with the low molecular weight PAE resins (Examples 50-53) had significantly lower viscosity than the formulation made with the high molecular weight PAE resin (Example 49). The dry and wet lap shear strength of Examples 50 was similar to the dry and wet lap shear for Example 49. Examples 51-53 showed similar dry shear values as Comparative Example 49 and had somewhat lower wet shear strength than Comparative Example 49.

Adhesive formulations with Cargill Prolia 100/90 soy flour were prepared.

Table 9. Adhesive Formulations Made From PAE Resins and Soy Flour

| Example Number | PAE Resin Example Number | B'fld. Visc. @ 1.5 rpm cPs | B'fld. Visc. @ 5.0 rpm cPs | Dry Shear psi | Wet Shear psi |
|---|---|---|---|---|---|
| 49 Comparative Example | 4 | 563,000 | 252,800 | 665 | 235 |
| 50 | 34 | 541,000 | 22,800 | 681 | 217 |
| 51 | 35 | 165,000 | 76,000 | 523 | 60 |
| 52 | 36 | 147,000 | 69,600 | 478 | 142 |
| 53 | 37 | 200,000 | 91,200 | 642 | 179 |

**Claims**

1. A composition comprising:

   a) a polyamidoamine-epihalohydrin polymer having a molecular weight of between as indicated in 2,000 - 100,000 g/mol, measured using Size Exclusion Chromatography, the description and
   b) a protein, in which the weight ratio of a) to b) is between 100 : 0.1 and 0.1 : 100.

2. Composition of claim 1 wherein b) is soy protein or soy flour.

3. Composition of claim 1 wherein the epihalohydrin is epichlorohydrin.

4. Use of the composition of claim 1 to adhere wood lignocellulosic to one another.

5. Wood products adhered to one another by a composition of claim 1.


**Patentansprüche**

1. Zusammensetzung, umfassend:

   a) ein Polyamidoamin-Epihalogenhydrin-Polymer mit einem Molekulargewicht von zwischen 2.000 und 100.000 g/mol, gemessen unter Verwendung von Größenausschlusschromatographie wie in der Beschreibung beschrieben, und
   b) ein Protein,

   wobei das Gewichtsverhältnis von a) zu b) zwischen 100:0,1 und 0,1:100 beträgt.

2. Zusammensetzung gemäß Anspruch 1, wobei b) Sojaprotein oder Sojamehl ist.

3. Zusammensetzung gemäß Anspruch 1, wobei das Epihalogenhydrin Epichlorhydrin ist.

4. Verwendung der Zusammensetzung gemäß Anspruch 1 zum Aneinanderhaften von Holz-Lignocellulosematerial.

5. Holzprodukte, die durch eine Zusammensetzung gemäß Anspruch 1 aneinandergehaftet sind.


**Revendications**

1. Composition comprenant :

   a) un polymère de polyamidoamine-épihalogénohydrine, ayant un poids moléculaire de 2000-100 000 g/mol, mesuré par Chromatographie de Perméation sur Gel, tel qu'indiqué dans la description, et

b) une protéine,

dans laquelle le rapport pondéral de a) à b) est compris entre 100:0,1 et 0,1:100.

2. Composition selon la revendication 1, dans laquelle b) est une protéine de soja ou de la farine de soja.

3. Composition selon la revendication 1, dans laquelle l'épihalogénohydrine est l'épichlorhydrine.

4. Utilisation de la composition selon la revendication 1, afin de faire adhérer des matériaux lignocellulosiques de bois les uns aux autres.

5. Produits de bois collés les uns aux autres par une composition selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20050282988 A
- US 7252735 B, Kaichang Li
- US 2001034406 A
- US 20050261404 A
- US 2004089418 A
- US 5786429 A
- US 5902862 A
- US 6222006 B
- US 6908983 B
- US 6554961 B
- US 6294645 B
- US 7060798 B
- US 5644021 A

### Non-patent literature cited in the description

- Wood-based Composite Products and Panel Products. Wood Handbook - Wood as an engineering material, Gen. Tech. Rep. FPL-GTR-113, 463 pages. U.S. Department of Agriculture, Forest Service, Forest Products Laboratory, 1999